# EUROPEAN PATENT SPECIFICATION

(11) **EP 1 619 375 B1**
(45) Date of publication and mention of the grant of the patent: **16.11.2016**
(21) Application number: 05015907.8
(22) Date of filing: 21.07.2005
(51) Int. Cl.: H02P 29/02, F02D 41/22, F02D 11/10

(54) **Device for controlling an electric motor and method for monitoring an abnormal operation of an electric motor**
Vorrichtung zum Betrieb eines Elektromotors und Verfahren zur Überwachung eines fehlerhaften Betriebs eines Elektromotors
Dispositif pour commander un moteur électrique et procédé pour surveiller un fonctionnement défectueux d'un moteur électrique

(30) Priority: 23.07.2004 JP 2004216136
(43) Date of publication of application: 25.01.2006
(73) Proprietor: Yamaha Hatsudoki Kabushiki Kaisha, Iwata-shi, Shizuoka-ken (JP)
(72) Inventor: Watanabe, Hiroto, Iwata-shi, Shizuoka-ken (JP); Uchiyama, Mikiyasu, Iwata-shi, Shizuoka-ken (JP); Kishi, Tomoaki, Iwata-shi, Shizuoka-ken (JP)
(74) Representative: Grünecker Patent- und Rechtsanwälte PartG mbB

(56) References cited:
- DE-A1- 4 030 533
- DE-A1- 19 723 456
- US-A- 4 932 246
- PATENT ABSTRACTS OF JAPAN vol. 1995, no. 02, 31 March 1995 (1995-03-31) & JP 06 307274 A (FUJITSU TEN LTD), 1 November 1994 (1994-11-01)

## Description

The present invention relates to a device for controlling an electric motor, a method for monitoring an abnormal operation of an electric motor, and program therefore, and in particular to an abnormality monitoring device for a motor control system, and more particularly to an abnormality monitoring device for monitoring an abnormality of a motor control system which is mounted on a vehicle.

Heretofore, according to an abnormality monitoring device described in the Japanese Patent Application Laid-Open No. 06-307274, in an electronic throttle system, it is judged that control means for controlling driving means is abnormal in a case where a certain or more difference is generated between an actual throttle valve opening (actual driving state) of the driving means for driving a throttle valve and a throttle valve opening (predicted driving state) predicted from a depressed amount of an accelerator pedal, and on the basis of the above judgment, such a measure as to stop the driving of a throttle motor is taken.

However, in the above-described conventional abnormality monitoring device described in Japanese Patent Application Laid-Open No. 06-307274, it is judged that the control means is abnormal in a case where the certain or more difference is generated between the actual throttle valve opening (actual driving state) and the predicted throttle valve opening (predicted driving state). Therefore, when the judging of the abnormality is delayed, the throttle motor abnormally operates to abnormally operate the throttle valve by the abnormality of the control means, and there is a possibility that an abnormal behavior is generated in a vehicle.

That is, in a motor control system for use in the electronic throttle system or the like mounted on the vehicle like a motorbike, unless it is quickly judged whether or not the motor control system is abnormal, the motor abnormally operates to generate the **abnormal behavior in the vehicle before it is judged that the system is abnormal. Therefore, in the motor control system mounted on the vehicle, it is necessary to judge that the motor control system is abnormal before the motor abnormality operates.**

**The document** US-A-4 932 246 **discloses a diagnostic fault test system including** a **microprocessor controller and different solenoid driver stages, each controlling a load apparatus comprising a separate solenoid. The solenoids are controlled by primary modulation and submodulation control signals of the microprocessor controller. A multiplexer circuit receives output signals of the different driver stages and selects which one of those signals is delivered as signal to a first input terminal of a comparator. A second input terminal of said comparator is connected to a threshold storage device storing two distinct analog threshold signals representative of a high threshold value and a low threshold value. The controller receives the result of said comparison and stores the result in either a low threshold or a high threshold register. The controller further determines if a fault was detected, and an indication of the defective driver stage is stored in a fault flag register.**

**The document** DE 40 30 533 A1 **discloses an arrangement for monitoring an electric consumer, wherein a computer unit supplies a drive signal to an electric drive. The drive signal is pulse-shaped, wherein the pulse length, respectively, the pulse-duty factor of the pulse-shaped signal is variable. Said pulse length determines the duration of the phase when a power switch is switched on. A monitoring arrangement comprises comparator means and an evaluation device. Said comparator means compare the potentials of the connecting nodes to given reference voltages.**

**The document** DE 197 23 456 A1 **discloses a false-closure detection device for electrical consumers, wherein a controller device supplies control signals to two power switches. A measuring device is connected to the power switches and delivers a diagnostic voltage to a diagnostic device, which compares the voltage to a reference value in order to detect a false-closure of the load circuit. The diagnostic device delivers output signals to another evaluation device of the control device.**

**It is an object of the present invention to** provide an abnormality monitoring device for a motor control system, which monitors a driving signal output from a driving section to judge whether or not the driving section is abnormal in an output end of the driving section for driving a motor, so that the abnormality of the driving section can be detected before the motor abnormally operates.

For the apparatus aspect this objective is solved by a device having the features of claim 1.

For the method aspect this objective is further solved by a method having the features of claim 11.

Preferred embodiments are laid down in the dependent claims.

In the following the present invention is explained in further detail with respect to the several embodiments thereof in conjunction with the accompanying drawings, wherein:
- FIG. 1: is a left-side view showing a constitution of a motorbike according to embodiment 1;
- FIG. 2: is an enlarged left-side view of an engine unit of FIG. 1;
- FIG. 3: is an enlarged right-side view of the engine unit of FIG. 1;
- FIG. 4: is a diagram showing a constitution of a throttle valve mechanism of FIG. 1;
- FIG. 5: is a block diagram showing a constitution of a control system of the motorbike of FIG. 1;

- FIG. 6: is a flowchart showing an operation of an abnormality judging section of FIG. 5;
- FIG. 7(a): is a timing chart showing a PWM driving signal of a +(-) terminal, (b) is a timing chart showing a monitoring time set value, (c) is a timing chart showing a counted value of a count-up timer, and (d) is a timing chart showing a rising abnormality signal;
- FIG. 8: is a block diagram showing a constitution of a control system of a motorbike according to embodiment 2;
- FIG. 9: is a flowchart showing an operation of the abnormality judging section of FIG. 8;
- FIG. 10(a): is a timing chart showing the PWM driving signal of the +(-) terminal, (b) is a timing chart showing the monitoring time set value, (c) is a timing chart showing the counted value of the count-up timer, and (d) is a timing chart showing the rising abnormality signal; and
- FIG. 11 (a): is a timing chart showing an indication duty, (B) is a timing chart showing the PWM driving signal of the +(-) terminal, (c) is a timing chart showing the monitoring time set value, (d) is a timing chart showing the counted value of the count-up timer, and (e) is a timing chart showing the rising abnormality signal.

An embodiment will be described hereinafter in more detail with reference to the drawings.

### (Embodiment 1)

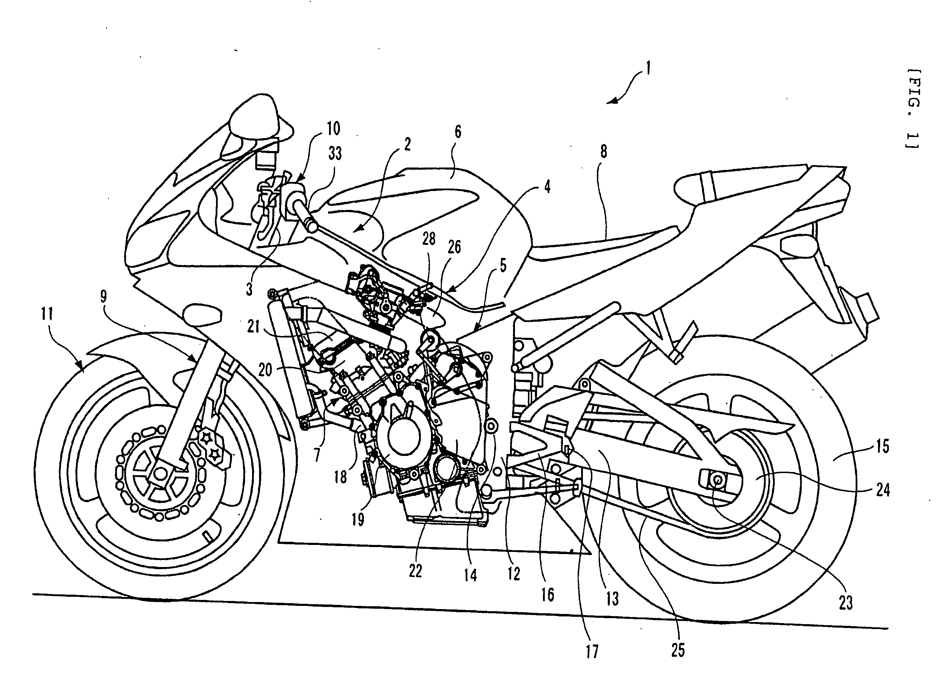

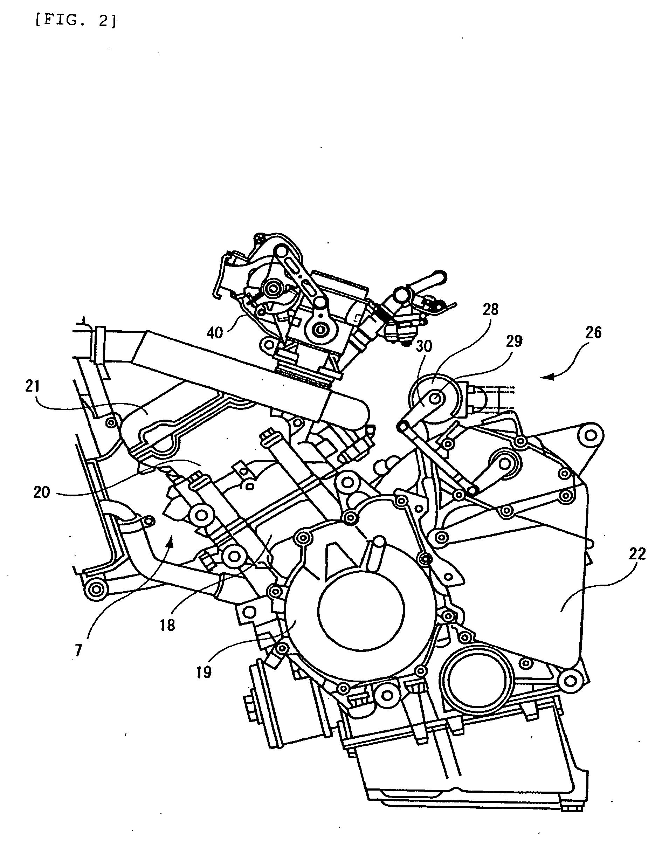

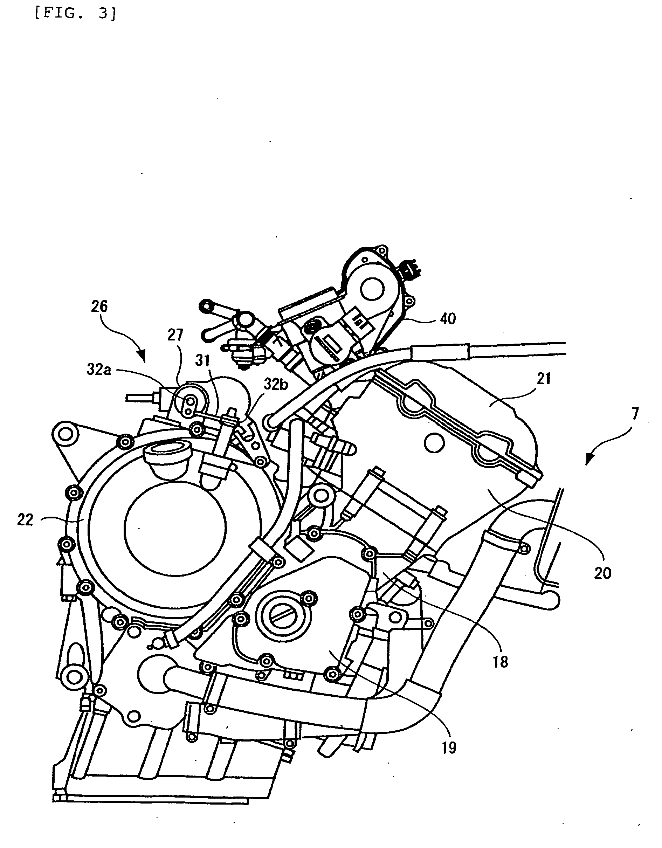

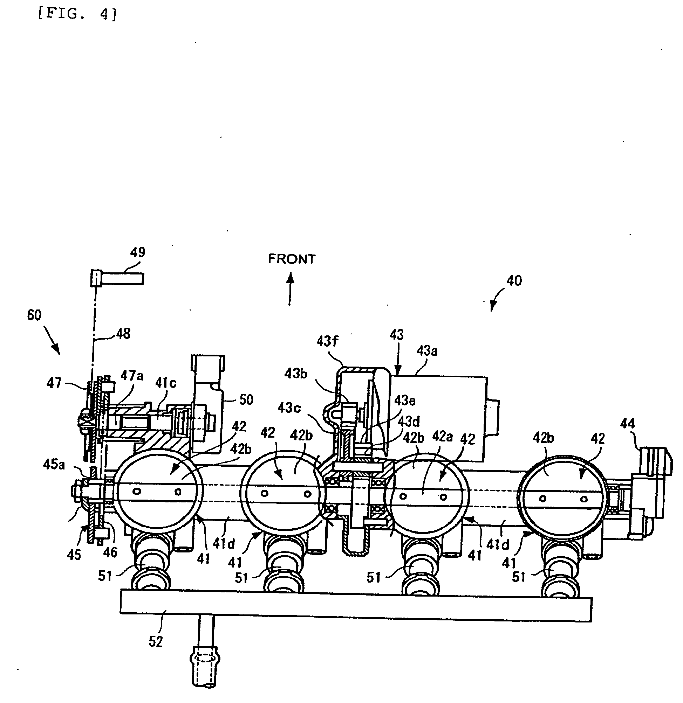

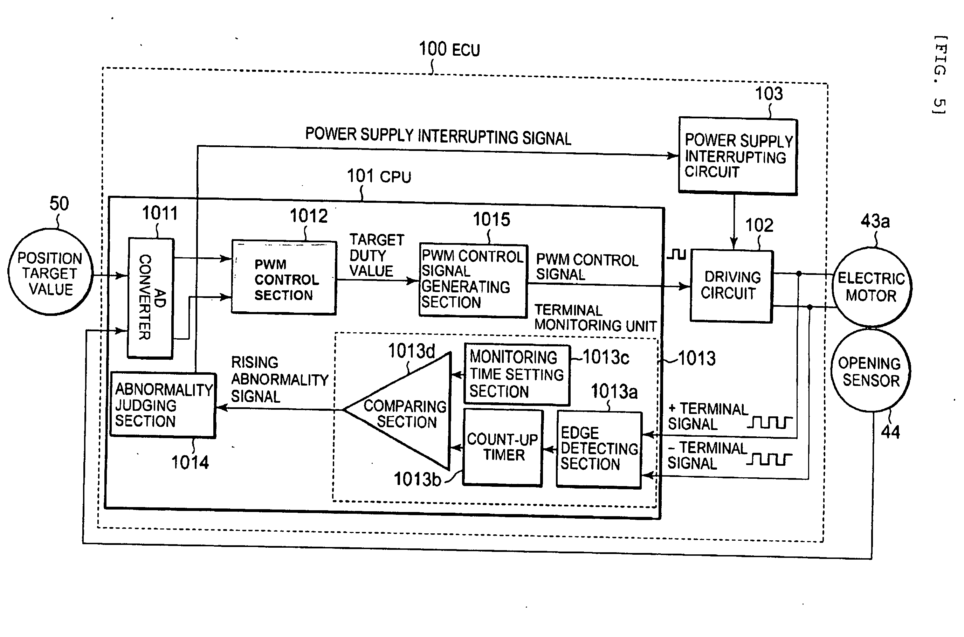

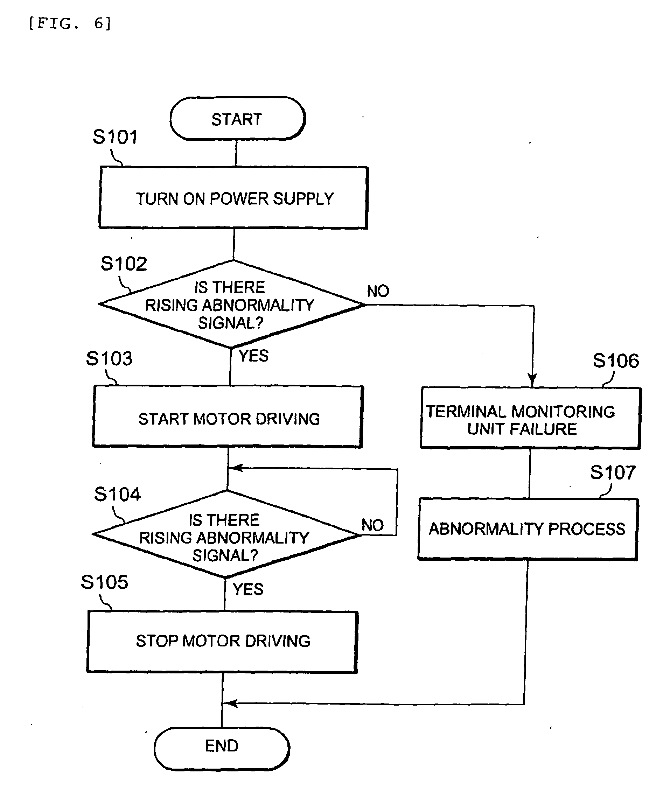

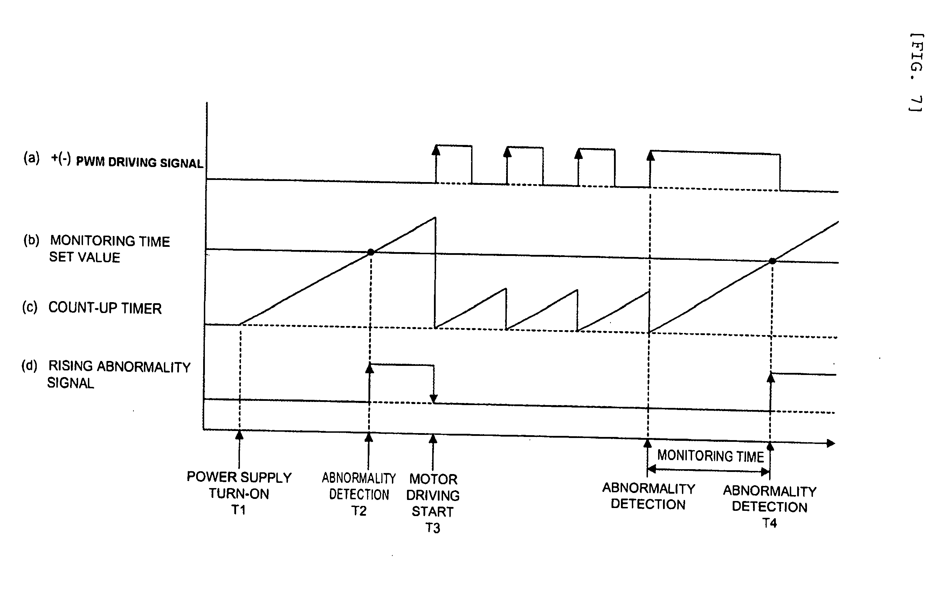

In embodiment 1, application of the embodiment to a motorbike will be described. FIGS. 1 to 7 are explanatory views of the motorbike in embodiment 1 to which the present embodiment is applied. FIG. 1 is a left-side view of the motorbike, FIG. 2 is an enlarged left-side view of an engine unit of FIG. 1, FIG. 3 is an enlarged right-side view of the engine unit of FIG. 1, FIG. 4 is a diagram showing a constitution of a throttle valve mechanism, FIG. 5 is a block diagram showing a constitution of an ECU of the motorbike, FIG. 6 is a flowchart showing an operation in the ECU of FIG. 5, and FIG. 7 is a timing chart showing an operation in a terminal monitoring section of FIG. 5.

First, a constitution of the motorbike will be described with reference to FIG. 1. In FIG. 1, in a motorbike 1, a vehicle body frame 2 is connected to a head pipe 3, and a rear frame 5 extending obliquely rearwards is connected to rear ends of a pair of right and left tank rails 4. A fuel tank 6 is disposed above the tank rails 4, and an engine unit 7 is disposed under the rails. A main seat 8 is disposed in a front part of the rear frame 5.

Moreover, a front fork 9 is pivotably supported by the head pipe 3, a steering handle 10 is connected to an upper end of the front fork 9, and a front wheel 11 is connected to a lower end of the fork. A rear arm 13 is vertically pivotably supported via a pivot shaft 14 on a rear arm bracket 12 disposed under the rear ends of the tank rails 4, and a rear wheel 15 is provided on a rear end of the rear arm 13.

Moreover, the rear arm bracket 12 is provided with a step bracket 16 protruding rearwards, and the step bracket 16 is provided with a step 17 on which a rider steps is disposed and which is directed to the outside of a vehicle-width direction.

In the present embodiment, the engine unit 7 functions as a water-cooling type 4-cycle parallel 4-cylinder power source. A cylinder shaft of a cylinder block 18 is tilted slightly toward a front part of a vehicle body. A crank case 19 is positioned under the cylinder block 18 to house a crank shaft, and is directed in the vehicle-width direction. The case is suspended and supported in the vehicle body frame 2. It is to be noted that a cylinder head 20 and a head cover 21 are stacked and connected onto an upper surface of the cylinder block 18.

Moreover, behind the cylinder block 18, a transmission case 22 (hereinafter referred to as the transmission) is integrally formed to house a multiple shift mechanism constituted of: a main shaft and a driving shaft of a transmission device arranged in parallel with the crank shaft; and a plurality of stages of transmission gears. This transmission 22 is provided with a clutch (not shown) which discontinues or continues transmitting rotation at a switching time of the transmission gear. The crank case 19 is connected to lower surfaces of the cylinder block 18 and the transmission 22.

Moreover, a shaft portion 23 for connecting the rear wheel 15 to the rear end of the rear arm 13 is provided with a driven sprocket 24, and a chain 25 is wound between the driven sprocket 24 and a driving sprocket (not shown) fixed to the driving shaft of the engine unit 7. Accordingly, an engine power is transmitted to the rear wheel 15 via the chain 25.

Furthermore, an automated transmission (AMT) mechanism 26 is disposed behind the cylinder block 18 and above the transmission 22. This AMT mechanism 26 automatically operates the clutch or switches the transmission gear of the transmission 22, and includes an electric motor 27 (see FIG. 3) for operating the clutch, and another constituting component required in AMT.

As shown in FIG. 2, a shift driving mechanism 28 is positioned in an upper part of the transmission 22 on a left side as facing a running direction of the motorbike 1, and operates the multiple shift mechanism in the transmission 22 by a link mechanism of a rod 29 and a lever 30.

Moreover, as shown in FIG. 3, the electric motor 27 for the clutch is positioned in the upper part of the transmission 22 on a right side as facing the running direction of the motorbike 1, and a clutch mechanism comprises the electric motor 27 for the clutch, a rod 31, and levers 32a, 32b. When the electric motor 27 for the clutch rotates, the lever 32a rocks in a vertical direction in the figure, the rod 31 moves in a longitudinal direction in the figure by the rocking of the lever 32a, and the lever 32b rocks in a cross direction in the figure by the movement of the rod 31 to disengage or engage the clutch in the transmission 22. The electric motor 27 for the clutch, the rod 31, and the levers 32a, 32b function as a driving source. Reference numeral 40 in FIGS. 2 and 3 denotes a throttle mechanism, and a constitution of the mechanism will be described later.

In FIG. 1, for example, a shift switch (not shown) is disposed on a grip side of a left handle 33. When the rider manually operates the shift switch, a shift position of the transmission gear is changed from a neutral to a first or top gear in an increasing or decreasing direction. An AMT switch (not shown) is also disposed on the grip side of the left handle 33 to switch a gear shift operation to a semi-automatic or full automatic mode.

The multiple shift mechanism and the switching of the clutch are both driven by a wire or a hydraulic mechanism (not shown) by use of the AMT mechanism 26.

Next, the throttle mechanism 40 will be described with reference to FIG. 4. The mechanism is connected to a suction port of each cylinder in the engine unit 7.

In FIG. 4, each throttle body 41 has a cylindrical shape, and each throttle valve 42 is constituted by fixing a disc-shaped valve plate 42b disposed in each throttle body 41 to a common valve shaft 42a disposed in such a manner as to pass through all of the throttle bodies 41. The throttle bodies 41, 41 on right and left sides of FIG. 4 are connected to each other via connecting boss portions 41d, 41d, and an electromotive driving mechanism 43 is disposed between the middle throttle bodies 41, 41.

In the electromotive driving mechanism 43, an electric motor 43a is disposed in such a manner that a rotation shaft of the motor extends in parallel with the valve shaft 42a. Rotation of a driving gear 43b attached to the rotation shaft of the electric motor 43a is transmitted to a fan-shaped valve shaft driving gear 43e fixed to the valve shaft 42a via a large intermediate gear 43c and a small intermediate gear 43d. The valve shaft 42a is rotated and driven by the valve shaft driving gear 43e. This electromotive driving mechanism 43 is housed in a case 43f formed separately from the throttle body 41. It is to be noted that the electric motor 43a is a DC motor.

Moreover, a throttle valve opening sensor 44 for detecting an opening of the throttle valve 42 is attached to a right end portion of the valve shaft 42a which protrudes outwards. A disc-shaped boss portion 45a of a free arm 45 is relatively rotatably attached to a left end portion, and an arm portion 45b (not shown) of the free arm 45 is connected to an intermediate pulley 47 via a link plate 46. This intermediate pulley 47 is connected to a throttle grip 49 of the steering handle 10 via a throttle cable 48.

The link plate 46, the intermediate pulley 47, the throttle cable 48, and the throttle grip 49 constitute a throttle operating mechanism 60 for manually opening/closing the throttle valve 42 in accordance with a rider's operated amount of the throttle grip 49.

The intermediate pulley 47 is fixed and supported onto a left end of an intermediate shaft 47a in such a manner that the pulley rotates together with the shaft, and this intermediate shaft 47a is rotatably supported by a boss portion 41c provided in the left-end throttle body 41. A right end of the intermediate shaft 47a is connected to a throttle grip opening sensor 50 which detects an operation angle of the throttle grip 49.

Moreover, a fuel injection valve 51 is disposed under each throttle body 41 for each cylinder, and a common fuel supply pipe 52 is connected to a fuel introducing portion of each fuel injection valve 51.

Next, a constitution of an ECU 100 of the motorbike 1 will be described with reference to a block diagram of FIG. 5.

In FIG. 5, an engine control unit (ECU) 100 mainly comprises a CPU 101, a driving circuit 102, and a power supply interrupting circuit 103. This ECU 100 will be described whose control object is the electric motor 43a of the electromotive driving mechanism 43 of the throttle mechanism 40.

The central processing unit (CPU) 101 is provided with an AD converter 1011, a PWM duty calculating section 1012, a terminal monitoring unit 1013, an abnormality judging section 1014, and a PWM control signal generating section 1015. Furthermore, the terminal monitoring unit 1013 is provided with an edge detecting section 1013a, a count-up timer 1013b, a monitoring time setting section 1013c, and a comparing section 1013d.

The AD converter 1011 converts into digital values a position target value (analog signal) input from the throttle grip opening sensor 50 in accordance with the operated amount of the throttle grip 49 and a throttle opening (analog signal) input from the throttle valve opening sensor 44, and the converter outputs the values to the PWM duty calculating section 1012.

The pulse width modulation (PWM) duty calculating section 1012 calculates a difference between the position target value and the throttle opening based on the respective digital values of the position target value and the throttle opening input from the AD converter 1011, and the section calculates a target duty value for operating the electric motor 43a to a position corresponding to the difference to output the value to the PWM control signal generating section 1015. The PWM control signal generating unit section 1015 generates a PWM control signal based on the target duty value input from the PWM duty calculating section 1012 to output the signal to the driving circuit 102. It is to be noted that a setting range of the target duty value is 0% to 100%. The PWM duty calculating section 1012 functions as a control section.

The edge detecting section 1013a detects rising edges of pulses of + and - terminal signals of PWM driving signals output from output terminals (+)(-) of the driving circuit 102, and outputs an edge detection signal to the count-up timer 1013b.

The count-up timer 1013b starts counting up at a power supply turn-on time of the ECU 100, or a motor driving start time by the driving circuit 102. When the edge detection signal is input from the edge detecting section 1013a, a counted value is reset, and thereafter the timer resumes the counting-up. The count-up timer 1013b outputs the counted value to one input terminal of the comparing section 1013d. The count-up timer 1013b functions as a counting section.

The monitoring time setting section 1013c sets a monitoring time of the rising edge detected by the edge detecting section 1013a based on the PWM control signal generated by the PWM control signal generating section 1015. The monitoring time is set to be not less than a PWM period (e.g., twice) set in accordance with the PWM control signal. The monitoring time setting section 1013c outputs the monitoring time set value to the other input terminal of the comparing section 1013d. It is to be noted that the monitoring time setting section 1013c sets the monitoring time in accordance with the PWM period in a case where the target duty value calculated by the PWM duty calculating section 1012 is greater than 0% and is less than 100%.

The comparing section 1013d compares the counted value input from the count-up timer 1013b with the monitoring time set value input from the monitoring time setting section 1013c. The section does not output any rising abnormality signal in a case where the counted value does not exceed the monitoring time set value, and judges that there is not any signal ("low" signal). When the counted value exceeds the monitoring time set value, the section outputs the rising abnormality signal ("high" signal) to the abnormality judging section 1014.

That is, the comparing section 1013d outputs the "high" signal as the rising abnormality signal to the abnormality judging section 1014, when the rising edge of the pulse for the monitoring time is not detected by the edge detecting section 1013a and the counted value exceeds the monitoring time set value, in the case where the target duty value calculated by the PWM duty calculating section 1012 is greater than 0% and is less than 100%. The comparing section 1013d functions as an edge period comparing section.

Moreover, in the case where the target duty values are 0% and 100%, when any pulse rising edge is not detected by the edge detecting section 1013a within the monitoring time and the counted value exceeds the monitoring time set value, the comparing section 1013d outputs the rising abnormality signal, but the abnormality judging section 1014 judges that the driving circuit is normal. That is, when the target duty values are 0% and 100%, the PWM driving signal output from the driving circuit 102 remains to be the "low" or "high" signal, and any rising edge is not detected by the edge detecting section 1013a. Therefore, the count-up timer 1013b continues counting up, and the counted value exceeds the monitoring time set value. Therefore, in the present embodiment, when the target duty values are 0% and 100%, the abnormality judging section 1014 judges that the counted value exceeding the monitoring time set value is normal. When the rising edge is detected and the counted value does not exceed the monitoring time set value, the abnormality judging section 1014 judges that the driving circuit is abnormal.

When the rising abnormality signal is input from the comparing section 1013d, the abnormality judging section 1014 judges that the driving circuit 102 is abnormal, and outputs a power supply interrupting signal to the power supply interrupting circuit 103. In the case where the target duty value set by the target duty calculating section 1012 is greater than 0% and is less than 100%, when the pulse rising edge is not detected within the monitoring time by the edge detecting section 1013a and the rising abnormality signal ("high" signal) is input from the comparing section 1013d, the abnormality judging section 1014 judges that the driving circuit 102 is abnormal, and outputs the power supply interrupting signal to the power supply interrupting circuit 103.

Moreover, in the case where the target duty values are 0% and 100%, when any pulse rising edge is not detected by the edge detecting section 1013a within the monitoring time and the rising abnormality signal ("high" signal) is input from the comparing section 1013d, the abnormality judging section 1014 judges that the driving circuit 102 is normal. When the rising edge of the pulse is detected by the edge detecting, section 1013a within the monitoring time and the rising abnormality signal ("high" signal) is not input from the comparing section 1013d, the abnormality judging section judges that the driving circuit 102 is abnormal, and outputs the power supply interrupting signal to the power supply interrupting circuit 103.

The driving circuit 102 generates the PWM driving signal based on the PWM control signal input from the PWM control signal generating section 1015 to drive the electric motor 43a. When the power supply interrupting signal is input from the abnormality judging section 1014, the power supply interrupting circuit 103 interrupts the power to be supplied to the driving circuit 102 to stop the operation of the driving circuit 102.

Next, an operation of the ECU 100 will be described with reference to a flowchart shown in FIG. 6 and a timing chart shown in FIG. 7 in a case where the target duty value is greater than 0% and is less than 100%.

In FIG. 6, when a power supply of the ECU 100 is turned on (step S101), the abnormality judging section 1014 judges whether or not the rising abnormality signal is input from the comparing section 1013d (step S102). Operations of the terminal monitoring unit 1013 and the abnormality judging section 1014 will be described at this power supply turn-on time with reference to FIG. 7.

In FIG. 7, (a) is a timing chart showing an operation of the above-described +(-) terminal signal, (b) is a timing chart showing an operation of the monitoring time set value, (c) is a timing chart showing an operation of the counted value of the count-up timer 1013b, and (d) is a timing chart showing an operation of the rising abnormality signal.

As shown in FIG. 7, in a timing T1 of power supply turn-on, the count-up timer 1013b starts counting up. At this time, it is assumed that any control is not started with respect to the electric motor 43a, and an initial monitoring time set value is set in the monitoring time setting section 1013c. Since the control with respect to the electric motor 43a is not started, the count-up timer 1013b continues counting up, and the counted value exceeds the monitoring time set value. Moreover, when the counted value exceeds the monitoring time set value, as shown in the figure (d), the comparing section 1013d outputs the rising abnormality signal ("high" signal) at a timing T2 of abnormality detection.

Therefore, immediately after the power supply is turned on, the PWM driving signal for driving the motor is not output from the driving circuit 102. Therefore, the abnormality judging section 1014 judges whether or not the rising abnormality signal ("high" signal) is output from the comparing section 1013d to judge whether the respective operations are normal or abnormal in the edge detecting section 1013a, count-up timer 1013b, monitoring time setting section 1013c, and comparing section 1013d of the terminal monitoring unit 1013.

In step S102, when the rising abnormality signal ("high" signal) is input from the comparing section 1013d, the abnormality judging section 1014 judges that the operation of each section in the terminal monitoring unit 1013 is normal (step S102: YES), and the process shifts to step S103 to start driving the motor. When any rising abnormality signal ("high" signal) is not input from the comparing section 1013d, the abnormality judging section 1014 judges that the operation of each section of the terminal monitoring unit 1013 is abnormal (step S102: NO), and the process shifts to step S106 to execute a terminal monitoring unit failure process. Next, an abnormality process is executed in step S107.

Next, in FIG. 7, after the rising abnormality signal at the above-described abnormality detection time (T2) reaches a "high" level, the abnormality judging section 1014 judges that the operation of the terminal monitoring unit 1013 is normal. As soon as the driving of the motor is started (T3), the rising abnormality signal is reset to a "low" level. After the motor driving start T3, the PWM duty calculating section 1012 calculates a difference between the position target value and the throttle opening based on the respective digital values of the position target value and the throttle opening input from the AD converter 1011, and the section calculates the target duty value corresponding to the difference. The PWM control signal is generated based on the target duty value in the PWM control signal generating section 1015, and is output to the driving circuit 102. In the driving circuit 102, the +(-) terminal signal (PWM driving signal) shown in the figure (a) is generated based on the PWM control signal input from the PWM control signal generating section 1015, and is output to the electric motor 43a.

Moreover, when the motor driving is started, in the terminal monitoring unit 1013, the edge detecting section 1013a detects the rising edges of the respective pulses of the + and - terminal signals output from output terminals (+)(-) of the driving circuit 102. As shown in FIGS. 7(a) and (b), when the rising edge of each pulse is detected by the edge detecting section 1013a, the counted value of the count-up timer 1013b is reset. At this time, since the counted value is reset to be less than the monitoring time set value, any rising abnormality signal is not output from the comparing section 1013d.

Next, in step S104 of FIG. 6, the abnormality judging section 1014 monitors whether or not the rising abnormality signal ("high" signal) is input from the comparing section 1013d. Unless the rising abnormality signal ("high" signal) is input from the comparing section 1013d (step S104: NO), the present process is repeated.

Moreover, when the rising abnormality signal ("high" signal) is input from the comparing section 1013d (step S104: YES), the abnormality judging section 1014 judges that the driving circuit 102 is abnormal, and shifts to step S105. The abnormality judging section outputs the power supply interrupting signal to the power supply interrupting circuit 103, and allows the power supply interrupting circuit 103 to stop the operation of the driving circuit 102.

That is, when, as shown in FIG. 7(a), abnormalities are generated in the + and - terminal signals, and a "high" state of each pulse continues, the count-up timer 1013b of the figure (c) continues counting up. When the counted value exceeds the monitoring time set value shown in figure (d), the comparing section 1013d outputs the rising abnormality signal ("high" signal) to the abnormality judging section 1014 (abnormality detection T4 in the figure).

The abnormality judging section 1014 judges that the driving circuit 102 is abnormal in accordance with the rising abnormality signal ("high" signal) input from the comparing section 1013d, and the power supply interrupting signal is output to the power supply interrupting circuit 103. In response to the power supply interrupting signal input from the abnormality judging section 1014, the power supply interrupting circuit 103 inhibits the power from being supplied to the driving circuit 102. As a result, the PWM driving signal output from the driving circuit 102 is stopped, and the driving of the electric motor 43a is stopped.

As described above, in the motorbike 1 of the present embodiment, the CPU 101 is provided with the terminal monitoring unit 1013 which monitors the PWM driving signal output from the driving circuit 102 for driving the electric motor 43a, and the abnormality judging section 1014 which judges whether or not the driving circuit 102 is abnormal. In the terminal monitoring unit 1013, the edge detecting section 1013a detects the rising edge of each pulse of the PWM driving signal, the count-up timer 1013b counts an edge detection period, and the comparing section 1013d compares the monitoring time set value (e.g., twice the PWM signal period) set by the monitoring time setting section 1013c based on the PWM control signal with the counted value of the count-up timer 1013b. Moreover, when the counted value exceeds the monitoring time set value, the comparing section 1013d outputs the rising abnormality signal ("high" signal) to the abnormality judging section 1014. When the rising abnormality signal ("high" signal) is input from the comparing section 1013d, the abnormality judging section 1014 judges that the driving circuit 102 is abnormal, outputs the power supply interrupting signal to the power supply interrupting circuit 103, interrupts the power supply for the driving circuit 102, and stops the operation of the electric motor 43a.

Therefore, the abnormality of the driving circuit 102 can be judged quickly, the abnormality of the driving circuit 102 is judged before the electric motor 43a abnormally operates, and the operation of the electric motor 43a can be stopped instantly. As a result, an abnormal behavior can be prevented from being generated in the motorbike by an abnormal operation of the electric motor 43a, and reliability of the motorbike can be enhanced.

It is to be noted that the detection of the rising edge of the pulse has been described above in embodiment 1, but a falling edge of the pulse may be detected.

Moreover, the operation of the ECU 100 has been described above with reference to FIGS. 6 and 7 in the case where the target duty value is greater than 0% and is less than 100%, but the terminal monitoring unit 1013 and the abnormality judging section 1014 have functions of detecting and judging the abnormality of the driving circuit 102 even in the case where the target duty value is 0%, 100%.

Therefore, the abnormality of the driving circuit 102 can be judged quickly even in the case where the target duty value is 0%, 100%. Prior to the abnormal operation performed by the electric motor 43a, it can be judged that the driving circuit 102 is abnormal, and the operation of the electric motor 43a can be stopped immediately.

Moreover, the abnormality judging section 1014 has a function of judging whether the operation of each section in the terminal monitoring unit 1013 is normal or abnormal before the PWM control of the motor is started by the PWM duty calculating section 1012.

Therefore, after the operation of the terminal monitoring unit 1013 is confirmed prior to the start of the PWM control of the motor, the PWM control can be started, and reliability of the ECU can be enhanced further.

### (Embodiment 2)

Embodiment 2 will be described. In the present embodiment, in addition to the judgment of the abnormality by the edge detection of embodiment 1, the abnormality is judged by duty detection. It is to be noted that constitutions of a motorbike, an engine unit, and a throttle valve mechanism of embodiment 2 are the same as those shown in FIGS. 1 to 4, and therefore drawings and constitution descriptions are omitted.

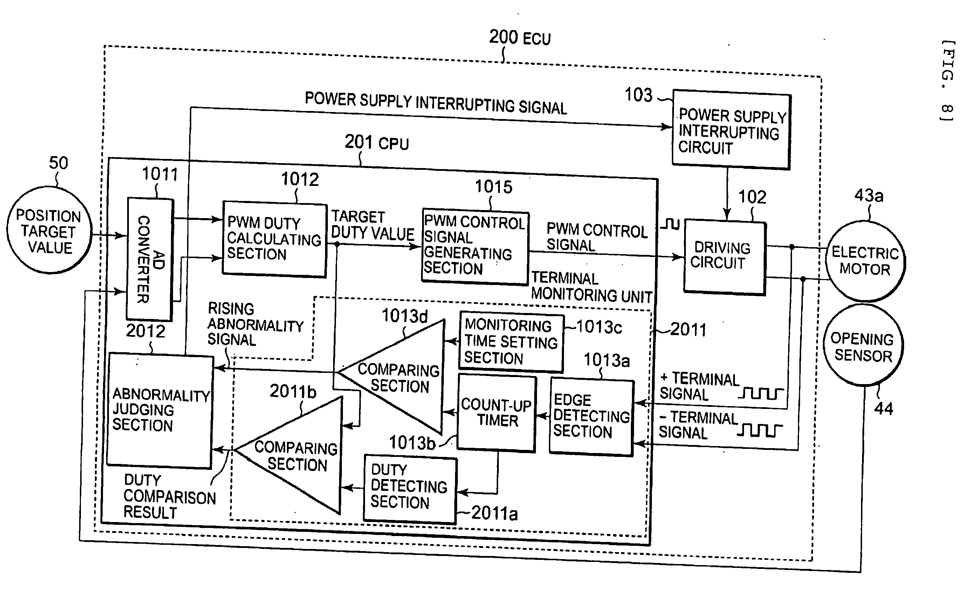

FIG. 8 is a diagram showing a constitution of an ECU 200 of embodiment 2. The same constituting components as those of the ECU 100 shown in FIG. 5 are denoted with the same reference numerals, and description thereof is omitted.

In FIG. 8, a terminal monitoring unit 2011 is provided with an edge detecting section 1013a, a count-up timer 1013b, a monitoring time setting section 1013c, a comparing section 1013d, a duty detecting section 2011 a, and a comparing section 2011 b.

The duty detecting section 2011 a detects a duty value of a PWM driving signal based on a counted value input from the count-up timer 1013b, and outputs the duty value to the comparing section 2011 b.

The comparing section 2011b compares a target duty value input from a PWM duty calculating section 1012 with the duty value input from the duty detecting section 2011a, and outputs a duty comparison result to an abnormality judging section 2012. The comparing section 2011 b functions as a duty comparing section.

The abnormality judging section 2012 judges that a driving circuit 102 is abnormal based on a rising abnormality signal input from the comparing section 1013d, and the duty comparison result input from the comparing section 2011b, and outputs a power supply interrupting signal to a power supply interrupting circuit 103.

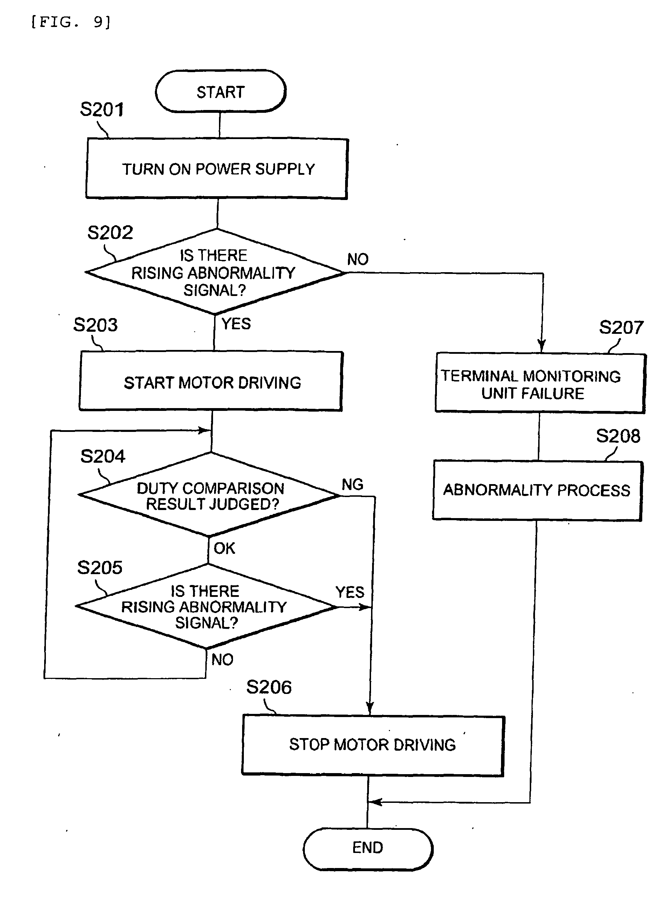

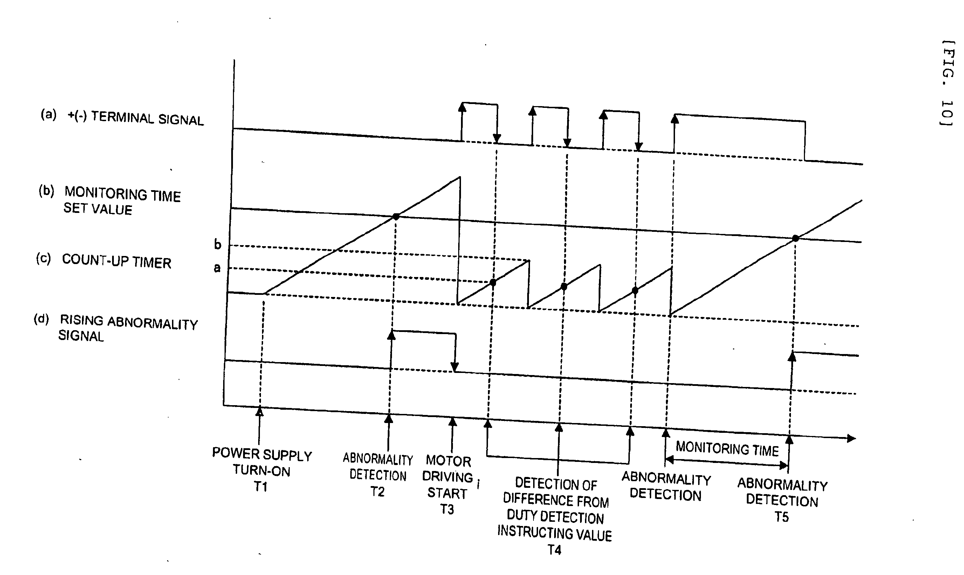

Next, an operation of the ECU 200 will be described with reference to a flowchart shown in FIG. 9 and a timing chart shown in FIG. 10 in a case where the target duty value is greater than 0% and is less than 100%.

In FIG. 9, when a power supply of the ECU 200 is turned on (step S201), the abnormality judging section 2012 judges whether or not the rising abnormality signal is input from the comparing section 1013d (step S202). Operations of the terminal monitoring unit 2011 and the abnormality judging section 2012 will be described at this power supply turn-on time with reference to FIG. 10.

In FIG. 10, (a) is a timing chart showing an operation of a +(-) terminal signal, (b) is a timing chart showing an operation of a monitoring time set value, (c) is a timing chart showing an operation of the counted value of the count-up timer 1013b, and (d) is a timing chart showing an operation of the rising abnormality signal.

As shown in FIG. 10, in a timing T1 of power supply turn-on, the count-up timer 1013b starts counting up. At this time, it is assumed that any control is not started with respect to an electric motor 43a, and an initial monitoring time set value is set in the monitoring time setting section 1013c. Since the control with respect to the electric motor 43a is not started, the count-up timer 1013b continues counting up, and the counted value exceeds the monitoring time set value. Moreover, when the counted value exceeds the monitoring time set value, as shown in the figure (d), the comparing section 1013d outputs the rising abnormality signal ("high" signal) at a timing T2 of abnormality detection.

Therefore, immediately after the power supply is turned on, a PWM driving signal for driving the motor is not output from the driving circuit 102. Therefore, the abnormality judging section 2012 judges whether or not the rising abnormality signal ("high" signal) is output from the comparing section 1013d to judge whether the respective operations are normal or abnormal in the edge detecting section 1013a, count-up timer 1013b, monitoring time setting section 1013c, and comparing section 1013d of the terminal monitoring unit 2011.

In step S202, when the rising abnormality signal ("high" signal) is input from the comparing section 1013d, the abnormality judging section 2012 judges that the operation of each section in the terminal monitoring unit 2011 is normal (step S202: YES), and the process shifts to step S203 to start driving the motor. When any rising abnormality signal ("high" signal) is not input from the comparing section 1013d, the abnormality judging section 2012 judges that the operation of each section of the terminal monitoring unit 2011 is abnormal (step S202: NO), and the process shifts to step S207 to execute a terminal monitoring unit failure process. Next, an abnormality process is executed in step S208.

Next, in FIG. 10, after the rising abnormality signal at the above-described abnormality detection time (T2) reaches a "high" level, the abnormality judging section 2012 judges that the operation of the terminal monitoring unit 2011 is normal. As soon as the driving of the motor is started (T3), the rising abnormality signal is reset to a "low" level. After the motor driving start T3, the PWM duty calculating section 1012 calculates a difference between a position target value and a throttle opening based on digital values of the position target value and the throttle opening input from an AD converter 1011, and the section calculates the target duty value corresponding to the difference. A PWM control signal is generated based on the target duty value, and is output to the driving circuit 102. In the driving circuit 102, the +(-) terminal signal (PWM driving signal) shown in the figure (a) is generated based on the PWM control signal input from a PWM control signal generating section 1015, and is output to the electric motor 43a.

Moreover, when the motor driving is started, in the terminal monitoring unit 2011, the edge detecting section 1013a detects rising edges of pulses of + and - terminal signals output from output terminals (+)(-) of the driving circuit 102. As shown in FIGS. 10(a) and (b), when the rising edge of each pulse is detected by the edge detecting section 1013a, the counted value of the count-up timer 1013b is reset. At this time, since the counted value is reset to be less than the monitoring time set value, any rising abnormality signal is not output from the comparing section 1013d.

Moreover, in the duty detecting section 2011 a, as shown in FIG. 10(c), the duty value of the PWM driving signal is detected as a value a with respect to a value b (edge period) of the counted value input from the count-up timer 1013b, and the duty value is output to the comparing section 2011b. Next, in the comparing section 2011b, the target duty value input from the PWM duty calculating section 1012 is compared with the duty value input from the duty detecting section 2011a, a difference is detected (T4 in the figure), and the difference is output to the abnormality judging section 2012.

Next, in step S204 of FIG. 9, the abnormality judging section 2012 judges whether the operation of the driving circuit 102 is normal or abnormal based on the difference which is the duty comparison result input from the comparing section 2011 b. In this case, for example, it is judged that the driving circuit 102 is abnormal in a case where the difference as the duty comparison result is not less than a certain value.

When the abnormality judging section 2012 judges in the step S204 that the driving circuit 102 is normal in accordance with the difference as the duty comparison result (step S204: OK), the process shifts to step S205.

Next, in step S205, the abnormality judging section 2012 monitors whether or not the rising abnormality signal ("high" signal) is input from the comparing section 1013d. When any rising abnormality signal ("high" signal) is not input from the comparing section 1013d (step S205: NO), the abnormality judging section returns to the step S204, and repeats the process.

Moreover, when the rising abnormality signal ("high" signal) is input from the comparing section 1013d (step S205: YES), the abnormality judging section 2012 judges that the driving circuit 102 is abnormal, shifts to step S206, outputs the power supply interrupting signal to the power supply interrupting circuit 103, and allows the power supply interrupting circuit 103 to stop the operation of the driving circuit 102.

That is, when, as shown in FIG. 10(a), abnormalities are generated in the + and - terminal signals, and a "high" state of each pulse continues, the count-up timer 1013b of the figure (c) continues counting up. When the counted value exceeds the monitoring time set value shown in the figure (b), the comparing section 1013d outputs the rising abnormality signal ("high" signal) to the abnormality judging section 2012 (abnormality detection T5 in the figure).

The abnormality judging section 2012 judges that the driving circuit 102 is abnormal in accordance with the rising abnormality signal ("high" signal) input from the comparing section 1013d, and the power supply interrupting signal is output to the power supply interrupting circuit 103. In response to the power supply interrupting signal input from the abnormality judging section 2012, the power supply interrupting circuit 103 inhibits the power from being supplied to the driving circuit 102. As a result, the PWM driving signal output from the driving circuit 102 is stopped, and the driving of the electric motor 43a is stopped.

Moreover, the abnormality judging section 2012 judges in the step S204 that the driving circuit 102 is abnormal in accordance with the difference which is the duty comparison result (step S204: NG). Then, the abnormality judging section shifts to the step S206, outputs the power supply interrupting signal to the power supply interrupting circuit 103, and allows the power supply interrupting circuit 103 to stop the operation of the driving circuit 102.

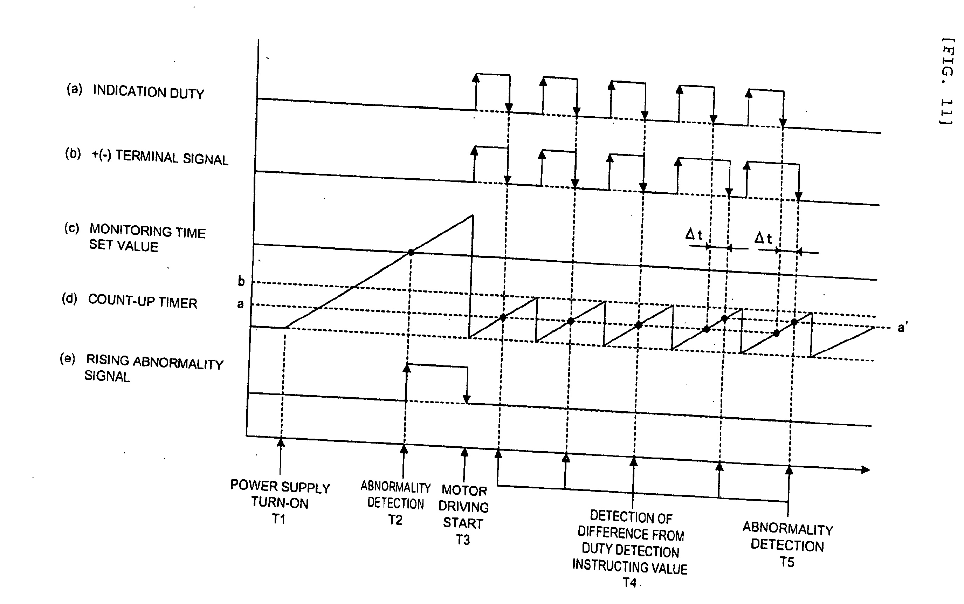

FIG. 11 shows an example of the case where the difference of the duty comparison result is abnormal. In FIG. 11, (a) is a timing chart showing an operation of an indication duty by the PWM control signal, (b) is a timing chart showing an operation of the +(-) terminal signal, (c) is a timing chart showing an operation of the monitoring time set value, (d) is a timing chart showing an operation of the counted value of the count-up timer 1013b, and (e) is a timing chart showing an operation of the rising abnormality signal.

When the duty value of the PWM driving signal output from the driving circuit 102 deviates from the indication duty as shown in FIG. 11(a), an a/b value indicating a normal duty changes to an a'/b value of a deviating duty as shown by the counted value of the figure (d). Moreover, a difference Δt shown in the figure is detected as a comparison result of the indication duty with the detected duty value. As a result, the abnormality judging section 2012 judges that the operation of the driving circuit 102 is abnormal by the difference Δt which is the duty comparison result input from the comparing section 2011b (abnormality detection T5 in the figure).

As a result, in the abnormality judging section 2012, the power supply interrupting signal is output to the power supply interrupting circuit 103, and the operation of the driving circuit 102 is stopped by the power supply interrupting circuit 103.

As described above, in the motorbike 1 of Embodiment 2, the CPU 201 is provided with the terminal monitoring unit 2011 which monitors the PWM driving signal output from the driving circuit 102 for driving the electric motor 43a, and the abnormality judging section 2012 which judges whether or not the driving circuit 102 is abnormal. In the terminal monitoring unit 2011, the edge detecting section 1013a detects the rising edge of each pulse of the PWM driving signal, the count-up timer 1013b counts an edge detection period, and the comparing section 1013d compares the monitoring time set value (e.g., twice the PWM signal period) set by the monitoring time setting section 1013c based on the PWM control signal with the counted value of the count-up timer 1013b. Moreover, when the counted value exceeds the monitoring time set value, the comparing section 1013d outputs the rising abnormality signal ("high" signal) to the abnormality judging section 2012.

Moreover, in the terminal monitoring unit 2011, the duty detecting section 2011a detects the duty value of the PWM driving signal from the counted value of the timer 1013b at the time of detection of a falling edge, and the comparing section 2011 b compares the duty value with the target duty value of the PWM control signal, and outputs the difference as the duty comparison result to the abnormality judging section 2012.

Furthermore, when the rising abnormality signal ("high" signal) is input from the comparing section 1013d, the abnormality judging section 1014 judges that the driving circuit 102 is abnormal, outputs the power supply interrupting signal to the power supply interrupting circuit 103, interrupts the power supply for the driving circuit 102, and stops the operation of the electric motor 43a. The abnormality judging section 2012 judges whether the operation of the driving circuit 102 is normal or abnormal based on the difference of the duty comparison result input from the comparing section 2011 b. When it is judged that the operation is abnormal, the power supply interrupting signal is output to the power supply interrupting circuit 103, the power supply for the driving circuit 102 is interrupted, and the operation of the electric motor 43a is stopped.

Therefore, the abnormality of the driving circuit 102 can be judged quickly by both of the edge detection and the duty detection, it is judged that the driving circuit 102 is abnormal before the electric motor 43a abnormally operates, and the operation of the electric motor 43a can be stopped instantly. As a result, an abnormal behavior can be prevented from being generated in the motorbike by an abnormal operation of the electric motor 43a, and reliability of the motorbike can be enhanced.

It is to be noted that the detection of the rising edge of. the pulse has been described above in Embodiment 2, but a falling edge of the pulse may be detected.

It is to be noted that it has been described above in the respective embodiments that the terminal monitoring unit is constituted as software in the CPU. In this case, since an abnormality monitoring program is constituted as an interrupting program without laying any burden onto a main routine of the CPU, it is possible to execute the abnormality monitoring as an interrupting process in an original engine control process. The teaching is not limited to the embodiments, and the terminal monitoring unit may be constituted, for example, by peripheral hardware.

According to the teaching of the present embodiments, the abnormality monitoring device for the motor control system employs a constitution comprising: a control section which generates a PWM control signal to PWM-control a motor; a driving section which generates a PWM driving signal based on the PWM control signal to drive the motor; a counting section which counts pulse periods of the PWM driving signal output from the driving section; and an abnormality judging section which judges whether or not the driving section is abnormal based on the PWM control signal and a counting result of the counting section.

According to this constitution, in an output end of the driving section for driving the motor, each pulse of the PWM driving signal output from the driving section is monitored to judge whether or not the driving section is abnormal, and therefore the abnormality of the driving section can be detected before the motor abnormally operates.

Moreover, according to the teaching of the present embodiments, the abnormality monitoring device for the motor control system employs a constitution comprising: a control section which generates a PWM control signal to PWM-control a motor; a driving section which generates a PWM driving signal based on the PWM control signal to drive the motor; an edge detecting section which detects a rising (or falling) edge of each pulse of the PWM driving signal output from the driving section; a counting section which counts an edge period of the rising (or falling) edge of each pulse detected by the edge detecting section; a monitoring time setting section which sets a monitoring time to monitor the edge period based on the PWM control signal; an edge period comparing section which compares the edge period counted by the counting section with the monitoring time set by the monitoring time setting section; and an abnormality judging section which judges whether or not the driving section is abnormal based on a comparison result of the comparing section.

According to this constitution, in an output end of the driving section for driving the motor, the rising (or falling) edge of each pulse of the PWM driving signal output from the driving section is detected to judge whether or not the driving section is abnormal. Therefore, the abnormality of the driving section can be detected to instantly stop the operation of the motor before the motor abnormally operates, and the abnormal operation of the motor can be prevented.

Furthermore, according to the teaching of present embodiments, the abnormality monitoring device for the motor control system employs a constitution comprising: a control section which generates a PWM control signal to PWM-control a motor; a driving section which generates a PWM driving signal based on the PWM control signal to drive the motor; an edge detecting section which detects a rising (or falling) edge of each pulse of the PWM driving signal output from the driving section; a counting section which counts an edge period of the rising (or falling) edge of each pulse detected by the edge detecting section; a monitoring time setting section which sets a monitoring time to monitor the edge period based on the PWM control signal; an edge period comparing section which compares the edge period counted by the counting section with the monitoring time set by the monitoring time setting section; a duty detecting section which detects a duty value of the PWM driving signal based on the edge period counted by the counting section; a duty comparing section which compares the duty value detected by the duty detecting section with a target duty value set in accordance with the PWM control signal; and an abnormality judging section which judges whether or not the driving section is abnormal based on comparison results of the edge period comparing section and the duty comparing section.

According to this constitution, in an output end of the driving section for driving the motor, the rising (or falling) edge of each pulse of the PWM driving signal output from the driving section and the duty are detected to judge whether or not the driving section is abnormal. Therefore, the abnormality of the driving section can be detected to instantly stop the operation of the motor before the motor abnormally operates, and the abnormal operation of the motor can be prevented.

Additionally, in the abnormality monitoring device for the motor control system of the present embodiments, the monitoring time setting section sets the monitoring time to be not less than the PWM period set in accordance with the PWM control signal.

According to this constitution, it is possible to securely detect the rising (or falling) edge of each pulse of the PWM driving signal as well as the duty, and the abnormality of the driving section can be securely judged.

Moreover, in the abnormality monitoring device for the motor control system of the present embodiments, the control section sets a control range of the target duty value to be greater than 0% and be less than 100%, and the abnormality judging section judges that driving section is abnormal, when the rising (or falling) edge is not detected by the edge detecting section and the comparison result that the counting result of the counting section exceeds the monitoring time is input thereto from the edge period comparing section.

According to this constitution, when the control range of the target duty value is greater than 0% and is less than 100%, it is possible to securely detect the rising (or falling) edge of ach pulse of the PWM driving signal and the duty, it can be securely judged that the driving section is abnormal, and the abnormal operation of the motor can be securely prevented.

Furthermore, in the abnormality monitoring device for the motor control system of the present embodiments, the control section sets a control range of the target duty value to 0% or more and 100% or less, and the abnormality judging section judges that driving section is abnormal, when the comparison result that the counting result of the counting section does not exceed the monitoring time is input thereto from the edge period comparing section in a case where the target duty values are 0% and 100%.

According to this constitution, when the target duty value is 0% or 100%, presence of the rising (or falling) edge of each pulse of the PWM driving signal is securely detected, it can be securely judged whether or not the driving section is abnormal, and the abnormal operation of the motor can be securely prevented.

Moreover, in the abnormality monitoring device for the motor control system of the present embodiment, the abnormality judging section judges that the driving section is abnormal in a case where there is a difference which is not less than a certain value between the target duty value and the detected duty value.

According to this constitution, the rising (or falling) edge of each pulse of the PWM driving signal and the duty can be securely detected to securely judge whether or not the driving section is abnormal.

Furthermore, in the abnormality monitoring device for the motor control system of the present embodiment, the abnormality judging section outputs an abnormality signal to the control section, when judging that the driving section is abnormal, and the control section detects the abnormality of the driving section based on the abnormality signal output from the abnormality judging section.

According to this constitution, the abnormality judging section outputs the abnormality signal to the control section, when judging that the driving section is abnormal, and the control section detects the abnormality of the driving section based on the abnormality signal output from the abnormality judging section. Therefore, the control section recognizes that the abnormality is generated in the driving section, and can instantly shift to an abnormality process. The reliability of the motor control system can be enhanced.

Moreover, in the abnormality monitoring device for the motor control system of the present embodiment, prior to start of the PWM control of the motor by the control section, the abnormality judging section judges whether operations of the edge period comparing section, the edge detecting section, the monitoring time setting section, and the counting section are normal or abnormal based on whether or not the comparison result that the counting result of the counting section exceeds the monitoring time is input from the edge period comparing section in a case where the rising (or falling) edge is not detected by the edge detecting section.

According to this constitution, prior to the start of the PWM control of the motor by the control section, the abnormality judging section judges whether the operations of the edge period comparing section, the edge detecting section, the monitoring time setting section, and the counting section are normal or abnormal based on whether or not the comparison result that the counting result of the counting section exceeds the monitoring time set value is input from the edge period comparing section. Therefore, failure of the abnormality monitoring device can be securely detected, and the reliability of the motor control system can be enhanced.

The abnormality monitoring program for the motor control system of the present embodiment is an abnormality monitoring program for a motor control system comprising: a control section which generates a PWM control signal to PWM-control a motor; and a driving section which generates a PWM driving signal based on the PWM control signal to drive the motor. The program has: an edge detecting step of detecting a rising (or falling) edge of each pulse of the PWM driving signal; a counting step of counting an edge period of the rising (or falling) edge of each detected pulse; a monitoring time setting step of setting a monitoring time to monitor the edge period based on the PWM control signal; a comparing step of comparing the counted edge period with the set monitoring time; and an abnormality judging step of judging an abnormality of the driving section based on the comparison result.

According to this program, in an output end of the driving section which drives the motor, the rising (or falling) edge of each pulse of the PWM driving signal output from the driving section is detected to judge whether or not the driving section is abnormal. Therefore, there can be provided the program which detects the abnormality of the driving section to instantly stop the operation of the motor before the motor abnormally operates, and the abnormal operation of the motor is prevented.

The abnormality monitoring program for the motor control system of the present embodiment is an abnormality monitoring device for a motor control system comprising: a control section which generates a PWM control signal to PWM-control a motor; and a driving section which generates a PWM driving signal based on the PWM control signal to drive the motor. The program has: an edge detecting step of detecting a rising (or falling) edge of each pulse of the PWM driving signal; a counting step of counting an edge period of the rising (or falling) edge of each detected pulse; a monitoring time setting step of setting a monitoring time to monitor the edge period based on the PWM control signal; a first comparing step of comparing the counted edge period with the set monitoring time; a duty detecting step of detecting a duty value of each pulse based on the counted edge period and detection of the falling edge; a second comparing step of comparing the detected duty value with a target duty value set in accordance with the PWM control signal; and an abnormality judging step of judging whether or not the driving section is abnormal based on comparison results of the first and second comparing steps.

According to this program, in an output end of the driving section which drives the motor, the rising (or falling) edge of each pulse of the PWM driving signal output from the driving section and the duty are detected to judge whether or not the driving section is abnormal. Therefore, there can be provided the program which detects the abnormality of the driving section to instantly stop the operation of the motor before the motor abnormally operates and which prevents the abnormal operation of the motor.

A vehicle of the present embodiments employs a constitution on which the abnormality monitoring device for the motor control system is mounted.

According to this constitution, in the output end of the driving section which drives the motor, the rising (or falling) edge of each pulse of the PWM driving signal output from the driving section and the duty are detected to judge whether or not the driving section is abnormal. Therefore, there can be provided the vehicle in which the abnormality of the driving section is detected to instantly stop the operation of the motor before the motor abnormally operates and which prevents the abnormal operation of the motor and the abnormal behavior.

In the abnormality monitoring device for the motor control system according to the present embodiments, the pulse of the PWM driving signal output from the driving section is monitored to judge whether or not the driving section is abnormal. It is possible to judge that the driving section is abnormal before the motor abnormally operates. The device is useful as an abnormality monitoring device for a motor control system for a motorbike.

Thus, according to the present preferred embodiments, there is provided an abnormality monitoring device for a motor control system, comprising: a control section which generates a PWM control signal to PWM-control a motor; a driving section which generates a PWM driving signal based on the PWM control signal to drive the motor; a counting section which counts pulse periods of the PWM driving signal output from the driving section; and an abnormality judging section which judges whether or not the driving section is abnormal based on the PWM control signal and a counting result of the counting section.

Accordingly, in the output end of the driving section for driving the motor, a pulse of the PWM driving signal output from the driving section is monitored to judge whether or not the driving section is abnormal, and the abnormality of the driving section can be detected before the motor abnormally operates.

Therein, a main point of the present embodiments is that a pulse of a PWM driving signal output from a driving section is monitored to judge whether or not the driving section is abnormal in an output end of the driving section which drives a motor, and the abnormality of the driving section is detected before the motor abnormally operates.

The description above discloses amongst others an abnormality monitoring device for a motor control system, comprising: a control section which generates a PWM control signal to PWM-control a motor; a driving section which generates a PWM driving signal based on the PWM control signal to drive the motor; a counting section which counts pulse periods of the PWM driving signal output from the driving section; and an abnormality judging section which judges whether or not the driving section is abnormal based on the PWM control signal and a counting result of the counting section.

The description above further discloses an abnormality monitoring device for a motor control system, comprising: a control section which generates a PWM control signal to PWM-control a motor, a driving section which generates a PWM driving signal based on the PWM control signal to drive the motor; an edge detecting section which detects a rising (or falling) edge of each pulse of the PWM driving signal output from the driving section; a counting section which counts an edge period of the rising (or falling) edge of each pulse detected by the edge detecting section; a monitoring time setting section which sets a monitoring time to monitor the edge period based on the PWM control signal; an edge period comparing section which compares the edge period counted by the counting section with the monitoring time set by the monitoring time setting section; and an abnormality judging section which judges whether or not the driving section is abnormal based on a comparison result of the comparing section.

The description above still further discloses an abnormality monitoring device for a motor control system, comprising: a control section which generates a PWM control signal to PWM-control a motor; a driving section which generates a PWM driving signal based on the PWM control signal to drive the motor; an edge detecting section which detects a rising (or falling) edge of each pulse of the PWM driving signal output from the driving section; a counting section which counts an edge period of the rising (or falling) edge of each pulse detected by the edge detecting section; a monitoring time setting section which sets a monitoring time to monitor the edge period based on the PWM control signal; an edge period comparing section which compares the edge period counted by the counting section with the monitoring time set by the monitoring time setting section; a duty detecting section which detects a duty value of the PWM driving signal based on the edge period counted by the counting section; a duty comparing section which compares the duty value detected by the duty detecting section with a target duty value set referred to in generating the PWM control signal; and an abnormality judging section which judges whether or not the driving section is abnormal based on comparison results of the edge period comparing section and the duty comparing section.

The monitoring time setting section may set the monitoring time to be not less than the PWM period set in accordance with the PWM control signal.

Preferably, the control section sets a control range of the target duty value to be greater than 0% and be less than 100%, and the abnormality judging section judges that the driving section is abnormal, when the rising (or falling) edge is not detected by the edge detecting section and the comparison result that the counting result of the counting section exceeds the monitoring time is input thereto from the edge period comparing section.

Further preferably, the control section sets a control range of the target duty value to 0% or more and 100% or less, and the abnormality judging section judges that driving section is normal, when the rising (or falling) edge is not detected by the edge detecting section and the comparison result that the counting result of the counting section exceeds the monitoring time is input thereto from the edge period comparing section, in a case where the target duty values are 0% and 100%.

Still further preferably, the abnormality judging section judges that the driving section is abnormal in a case where there is a difference which is not less than a certain value between the detected duty value and the target duty value.

Yet further preferably, the abnormality judging section outputs an abnormality signal to the control section, when judging that the driving section is abnormal, and the control section detects the abnormality of the driving section based on the abnormality signal output from the abnormality judging section.

Moreover, prior to start of the PWM control of the motor by the control section, the abnormality judging section may judge whether operations of the edge period comparing section, the edge detecting section, the monitoring time setting section, and the counting section are normal or abnormal based on whether or not the comparison result that the counting result of the counting section exceeds the monitoring time is input thereto from the edge period comparing section in a case where the rising (or falling) edge is not detected by the edge detecting section.

The description above further discloses an abnormality monitoring program for a motor control system comprising: a control section which generates a PWM control signal to PWM-control a motor; and a driving section which generates a PWM driving signal based on the PWM control signal to drive the motor, the program comprising: an edge detecting step of detecting a rising (or falling) edge of each pulse of the PWM driving signal; a counting step of counting an edge period of the rising (or falling) edge of each detected pulse; a monitoring time setting step of setting a monitoring time to monitor the edge period based on the PWM control signal; a comparing step of comparing the counted edge period with the set monitoring time; and an abnormality judging step of judging an abnormality of the driving section based on the comparison result.

The description above still further discloses an abnormality monitoring program for a motor control system comprising: a control section which generates a PWM control signal to PWM-control a motor; and a driving section which generates a PWM driving signal based on the PWM control signal to drive the motor, the program comprising: an edge detecting step of detecting a rising (or falling) edge of each pulse of the PWM driving signal; a counting step of counting an edge period of the rising (or falling) edge of each detected pulse; a monitoring time setting step of setting a monitoring time to monitor the edge period based on the PWM control signal; a first comparing step of comparing the counted edge period with the set monitoring time; a duty detecting step of detecting a duty value of each pulse based on the counted edge period; a second comparing step of comparing the detected duty value with a target duty value set in accordance with the PWM control signal; and an abnormality judging step of judging whether or not the driving section is abnormal based on comparison results of the first and second comparing steps.

The description yet further discloses a vehicle on which the abnormality monitoring device for the motor control system as outlined above.

Thus, in view of the above, there is, in particular, disclosed an abnormality monitoring device which monitors a pulse of a PWM driving signal output from a driving section to judge whether or not the driving section is abnormal in an output end of the driving section for driving a motor and which detects the abnormality of the driving section before the motor abnormally operates. Namely, a CPU 101 is provided with: a terminal monitoring unit 1013 for monitoring the PWM driving signal output from a driving circuit 102 which drives an electric motor 43a; and an abnormality judging section 1014 for judging whether or not the driving circuit 102 is abnormal. In the terminal monitoring unit 1013, an edge detecting section 1013a detects a rising edge of each pulse of the PWM driving signal, a count-up timer 1013b counts an edge detection period, and a comparing section 1013d compares a monitoring time set value set by a monitoring time setting section 1013c with a counted value. When the counted value exceeds the monitoring time set value, a rising abnormality signal is output to an abnormality judging section 1014. When the rising abnormality signal is input, the abnormality judging section 1014 judges that the driving circuit 102 is abnormal.

## Claims

1. Device for controlling an electric motor in an electronic throttle system mounted on a vehicle, comprising:
a terminal control section generating a control signal to control the motor,
a driving section generating a driving signal based on the control signal to drive the motor,
a counting section counting periods of the driving signal output from the driving section,
and
an abnormality judging section judging whether or not the driving section is in an abnormal operating condition based on the control signal and a counting result of the counting section.

2. Device according to claim 1, wherein the control section generates a PWM control signal to PWM-control a motor, the driving section generates a PWM driving signal based on the PWM control signal to drive the motor, the counting section counts pulse periods of the PWM driving signal output from the driving section and the abnormality judging section judges whether or not the driving section is abnormal based on the PWM control signal and a counting result of the counting section.

3. Device according to claim 1, wherein the control section generates a PWM to PWM-control a motor, the driving section generates a PWM driving signal based on the PWM control signal to drive the motor, wherein an edge detecting section detects a rising or falling edge of each pulse of the PWM driving signal output from the driving section, wherein the counting section counts an edge period of the rising or falling edge of each pulse detected by the edge detecting section, wherein a monitoring time setting section sets a monitoring time to monitor the edge period based on the PWM control signal, wherein an edge period comparing section compares the edge period counted by the counting section with the monitoring time set by the monitoring time setting section; and wherein the abnormality judging section judges whether or not the driving section is abnormal based on a comparison result of the comparing section.

4. Device according to claim 3, wherein a duty detecting section which detects a duty value of the PWM driving signal based on the edge period counted by the counting section, and a duty comparing section which compares the duty value detected by the duty detecting section with a target duty value set referred to in generating the PWM control signal, wherein the abnormality judging section judges whether or not the driving section is abnormal based on comparison results of the edge period comparing section and the duty comparing section.

5. Device according to claim 3 or 4, wherein the monitoring time setting section sets the monitoring time to be not less than the PWM period set in accordance with the PWM control signal.

6. Device according to one of the claims 3 to 5, wherein the control section sets a control range of the target duty value to be greater than 0% and be less than 100%, and the abnormality judging section judges that the driving section is abnormal, when the rising or falling edge is not detected by the edge detecting section and the comparison result that the counting result of the counting section exceeds the monitoring time is input thereto from the edge period comparing section.

7. Device according to one of the claims 3 to 5, wherein the control section sets a control range of the target duty value to 0% or more and 100% or less, and the abnormality judging section judges that driving section is normal, when the rising or falling edge is not detected by the edge detecting section and the comparison result that the counting result of the counting section exceeds the monitoring time is input thereto from the edge period comparing section, in a case where the target duty values are 0% and 100%.

8. Device according to one of the claims 4 to 6, wherein the abnormality judging section judges that the driving section is abnormal in a case where there is a difference which is not less than a certain value between the detected duty value and the target duty value.

9. Device according to one of the claims 3 to 8, wherein the abnormality judging section outputs an abnormality signal to the control section, when judging that the driving section is abnormal, and the control section detects the abnormality of the driving section based on the abnormality signal output from the abnormality judging section.

10. Device according to one of the claims 3 to 9, wherein prior to start of the PWM control of the motor by the control section, the abnormality judging section judges whether operations of the edge period comparing section, the edge detecting section, the monitoring time setting section, and the counting section are normal or abnormal based on whether or not the comparison result that the counting result of the counting section exceeds the monitoring time is input thereto from the edge period comparing section in a case where the rising or falling edge is not detected by the edge detecting section.

11. Method for monitoring an abnormal operating condition of an electric motor in an electronic throttle system mounted on a vehicle, a motor control comprising:
a control step generating a control signal to control the motor,
a driving step generating a driving signal based on the control signal to drive the motor,
a counting step of counting periods of the driving signal output from the driving section,
and an abnormality judging step of judging an abnormality of the driving step based on the control signal and the counting signal.

12. Method according to claim 11, wherein the control step generates a PWM control signal to PWM-control a motor, and the driving step generates a PWM driving signal based on the PWM control signal to drive the motor, wherein an edge detecting step detects a rising or falling edge of each pulse of the PWM driving signal, a counting step counts an edge period of the rising or falling edge of each detected pulse, a monitoring time setting step sets a monitoring time to monitor the edge period based on the PWM control signal, a comparing step compares the counted edge period with the set monitoring time, and the abnormality judging step judges an abnormality of the driving section based on the comparison result.

13. Method according to claim 11, wherein the control step generates a PWM control signal to PWM-control a motor, and the driving step generates a PWM driving signal based on the PWM control signal to drive the motor, wherein an edge detecting step detects a rising or falling edge of each pulse of the PWM driving signal, a counting step counts an edge period of the rising or falling edge of each detected pulse, a monitoring time setting step sets a monitoring time to monitor the edge period based on the PWM control signal, a first comparing step compares the counted edge period with the set monitoring time, a duty detecting step detects a duty value of each pulse based on the counted edge period, a second comparing step compares the detected duty value with a target duty value set in accordance with the PWM control signal, and the abnormality judging step judges whether or not the driving section is abnormal based on comparison results of the first and second comparing steps.

14. Program for controlling a device according to one of the claims 1 to 10 and embodying the method according to one of the claims 11 to 13.

## Patentansprüche

1. Vorrichtung zum Steuern eines Elektromotors in einem elektronischen Drosselsystem, das an einem Fahrzeug angebracht ist, umfassend:
einen Endgerätesteuerabschnitt, der ein Steuersignal erzeugt, um den Motor zu steuern,
einen Antriebsabschnitt, der ein Antriebssignal auf der Basis des Steuersignals erzeugt, um den Motor anzutreiben,
einen Zählabschnitt, der Perioden des Antriebssignals zählt, das aus dem Antriebsabschnitt ausgegeben wird, und
einen Abnormitätsbeurteilungsabschnitt, der, ob sich der Antriebsabschnitt in einem abnormen Betriebszustand befindet, auf der Basis des Steuersignals und eines Zählergebnisses des Zählabschnittes beurteilt.

2. Vorrichtung nach Anspruch 1, bei der der Steuerabschnitt ein PWM-Steuersignal erzeugt, um eine PWM-Steuerung eines Motors vorzunehmen, der Antriebsabschnitt ein PWM-Antriebssignal auf der Basis des PWM-Steuersignals erzeugt, um den Motor anzutreiben, der Zählabschnitt Impulsperioden des PWM-Antriebssignals zählt, das aus dem Antriebsabschnitt ausgegeben wird, und der Abnormitätsbeurteilungsabschnitt, ob sich der Antriebsabschnitt in einem abnormen Zustand befindet, auf der Basis des PWM-Steuersignals und eines Zählergebnisses des Zählabschnittes beurteilt.

3. Vorrichtung nach Anspruch 1, bei der der Steuerabschnitt eine PWM erzeugt, um eine PWM-Steuerung eines Motors auszuführen, der Antriebsabschnitt ein PWM-Antriebssignal auf der Basis des PWM-Steuersignals erzeugt, um den Motor anzutreiben, wobei ein Flankenerfassungsabschnitt eine ansteigende oder abfallende Flanke jedes Impulses des PWM-Antriebssignals erfasst, das aus dem Antriebsabschnitt ausgegeben wird, der Zählabschnitt eine Flankenperiode der ansteigenden oder abfallenden Flanke jedes Impulses zählt, der von dem Flankenerfassungsabschnitt erfasst wird, ein Überwachungszeit-Einstellabschnitt eine Überwachungszeit einstellt, um die Flankenperiode auf der Basis des PWM-Steuersignals zu überwachen, ein Flankenperioden-Vergleichsabschnitt die Flankenperiode, die mit dem Zählabschnitt gezählt wird, mit der Überwachungszeit vergleicht, die von dem Überwachungszeit-Einstellabschnitt eingestellt wird; und der Abnormitätsbeurteilungsabschnitt, ob sich der Antriebsabschnitt in einem abnormen Zustand befindet oder nicht, auf der Basis eines Vergleichsergebnisses des Vergleichsabschnitts beurteilt.

4. Vorrichtung nach Anspruch 3, bei der ein Lasterfassungsabschnitt einen Lastwert des PWM-Antriebssignals auf der Basis der Flankenperiode erfasst, die von dem Zählabschnitt gezählt wird, und ein Lastvergleichsabschnitt den Lastwert, der von dem Lasterfassungsabschnitt erfasst wird, mit einem Solllastwert vergleicht, auf den sich bei der Erzeugung des PWM-Steuersignals bezogen wird, wobei der Abnormitätsbeurteilungsabschnitt, ob der Antriebsabschnitt abnorm ist oder nicht, auf der Basis von Vergleichsergebnissen des Flankenperioden-Vergleichsabschnittes und des Lastvergleichsabschnittes beurteilt.

5. Vorrichtung nach Anspruch 3 oder 4, bei der der Überwachungszeit-Einstellabschnitt die Überwachungszeit so einstellt, dass sie nicht kürzer als die PWM-Periode ist, die in Übereinstimmung mit dem PWM-Steuersignal eingestellt wird.

6. Vorrichtung nach einem der Ansprüche 3 bis 5, bei der der Steuerabschnitt einen Steuerbereich des Solllastwertes derart einstellt, dass er größer als 0% und geringer als 100% ist, und der Abnormitätsbeurteilungsabschnitt beurteilt, dass sich der Antriebsabschnitt in einem abnormen Zustand befindet, wenn die ansteigende oder abfallende Flanke nicht von dem Flankenerfassungsabschnitt erfasst wird und das Vergleichsergebnis, dass das Zählergebnis des Zählabschnittes die Überwachungszeit überschreitet, dort von dem Flankenperioden-Vergleichsabschnitt eingegeben wird.

7. Vorrichtung nach einem der Ansprüche 3 bis 5, bei der der Steuerabschnitt einen Steuerbereich des Solllastwertes auf 0% oder mehr und 100% oder weniger einstellt und der Abnormitätsbeurteilungsabschnitt beurteilt, dass der Antriebsabschnitt normal arbeitet, wenn die ansteigende oder abfallende Flanke nicht von dem Flankenerfassungsabschnitt erfasst wird, und das Vergleichsergebnis, dass das Zählergebnis des Zählabschnittes die Überwachungszeit überschreitet, dort von dem Flankenperioden-Vergleichsabschnitt für den Fall eingegeben wird, dass die Solllastwerte 0% und 100% sind.

8. Vorrichtung nach einem der Ansprüche 4 bis 6, bei der der Abnormitätsbeurteilungsabschnitt beurteilt, dass der Antriebszustand für einen Fall abnorm ist, dass es eine Differenz, die nicht geringer als ein bestimmter Wert ist, zwischen dem erfassten Lastwert und dem Solllastwert gibt.

9. Vorrichtung nach einem der Ansprüche 3 bis 8, bei der der Abnormitätsbeurteilungsabschnitt ein Abnormitätssignal an den Steuerabschnitt ausgibt, wenn beurteilt wird, dass der Antriebsabschnitt abnorm arbeitet, und der Steuerabschnitt die Abnormität des Antriebsabschnittes auf der Basis des Abnormitätssignals erfasst, das von dem Abnormitätsbeurteilungsabschnitt ausgegeben wird.

10. Vorrichtung nach einem der Ansprüche 3 bis 9, bei der vor dem Beginn der PWM-Steuerung des Motors durch den Steuerabschnitt der Abnormitätsbeurteilungsabschnitt beurteilt, ob Vorgänge des Flankenperioden-Vergleichsabschnittes, des Flankenerfassungsabschnittes, des Überwachungszeit-Einstellabschnittes und des Zählabschnittes normal oder abnorm sind, basierend darauf, ob das Vergleichsergebnis, dass das Zählergebnis des Zählabschnittes die Überwachungszeit überschreitet oder nicht, dort von dem Flankenperioden-Vergleichsabschnitt eingegeben wird, für den Fall, dass die ansteigende oder abfallende Flanke nicht von dem Randerfassungsabschnitt erfasst wird.

11. Verfahren für die Überwachung eines abnormen Betriebszustandes eines Elektromotors in einem elektronischen Drosselsystem, das an einem Fahrzeug angebracht ist, wobei eine Motorsteuerung umfasst:
einen Steuerschritt, der ein Steuersignal erzeugt, um den Motor zu steuern,
einen Antriebsschritt, der ein Antriebssignal auf der Basis des Steuersignals erzeugt, um den Motor anzutreiben,
einen Zählschritt des Zählens von Perioden des Antriebssignals, das aus dem Antriebsabschnitt ausgegeben wird,
und einen Abnormitätsbeurteilungsschritt des Beurteilens einer Abnormität des Antriebsschrittes auf der Basis des Steuersignals und des Zählsignals.

12. Verfahren nach Anspruch 11, bei dem der Steuerschritt ein PWM-Steuersignal erzeugt, um eine PWM-Steuerung eines Motors vorzunehmen, und der Antriebsschritt ein PWM-Antriebssignal auf der Basis des PWM-Steuersignals erzeugt, um den Motor anzutreiben, wobei ein Flankenerfassungsschritt eine ansteigende oder abfallende Flanke jedes Impulses des PWM-Antriebssignals erfasst, ein Zählschritt eine Flankenperiode der ansteigenden oder abfallenden Flanke jedes erfassten Impulses zählt, ein Überwachungszeit-Einstellschritt eine Überwachungszeit einstellt, um die Flankenperiode auf der Basis des PWM-Steuersignals zu überwachen, ein Vergleichsschritt die gezählte Flankenperiode mit der eingestellten Überwachungszeit vergleicht und der Abnormitätsbeurteilungsschritt eine Abnormität des Antriebsabschnittes auf der Basis des Vergleichsergebnisses beurteilt.

13. Verfahren nach Anspruch 11, bei dem der Steuerschritt ein PWM-Steuersignal erzeugt, um eine PWM-Steuerung eines Motors vorzunehmen, und der Antriebsschritt ein PWM-Antriebssignal auf der Basis des PWM-Steuersignals erzeugt, um den Motor anzutreiben, wobei ein Flankenerfassungsschritt eine ansteigende oder abfallende Flanke jedes Impulses des PWM-Antriebssignals erfasst, ein Zählschritt eine Flankenperiode der ansteigenden oder abfallenden Flanke jedes erfassten Impulses zählt, ein Überwachungszeit-Einstellschritt eine Überwachungszeit einstellt, um die Flankenperiode auf der Basis des PWM-Steuersignals zu überwachen, ein erster Vergleichsschritt die gezählte Flankenperiode mit der eingestellten Überwachungszeit vergleicht, ein Lasterfassungsschritt einen Lastwert jedes Impulses auf der Basis der gezählten Flankenperiode erfasst, ein zweiter Vergleichsschritt den erfassten Lastwert mit einem Solllastwert vergleicht, der gemäß dem PWM-Steuersignal eingestellt wird, und der Abnormitätsbeurteilungsschritt beurteilt, ob sich der Antriebsabschnitt in einem abnormen Zustand befindet, basierend auf den Vergleichsergebnissen der ersten und zweiten Vergleichsschritte.

14. Programm für die Steuerung einer Vorrichtung nach einem der Ansprüche 1 bis 10 und Ausführen des Verfahrens nach einem der Ansprüche 11 bis 13.

## Revendications

1. Dispositif de commande d'un moteur électrique dans un système d'accélérateur électronique installé dans un véhicule, comprenant :
une partie de commande terminale générant un signal de commande pour commander le moteur,
une partie d'entraînement générant un signal d'entraînement sur la base du signal de commande pour entraîner le moteur,
une partie de comptage comptant des périodes du signal d'entraînement sorti par la partie d'entraînement,
et
une partie d'évaluation d'anomalie évaluant si la partie d'entraînement fonctionne de manière anormale sur la base du signal de commande et d'un résultat de comptage de la partie de comptage.

2. Dispositif selon la revendication 1, où la partie de commande génère un signal de commande MLI pour une commande MLI d'un moteur, la partie d'entraînement génère un signal d'entraînement MLI sur la base du signal de commande MLI pour entraîner le moteur, la partie de comptage compte les périodes des impulsions du signal d'entraînement MLI sorti par la partie d'entraînement et la partie d'évaluation d'anomalie évalue si la partie d'entraînement fonctionne de manière anormale sur la base du signal de commande MLI et d'un résultat de comptage de la partie de comptage.

3. Dispositif selon la revendication 1, où la partie de commande génère une MLI pour une commande MLI d'un moteur, la partie d'entraînement génère un signal d'entraînement MLI sur la base du signal de commande MLI pour entraîner le moteur, où une partie de détection de fronts détecte un front montant ou un front descendant de chaque impulsion du signal d'entraînement MLI sorti par la partie d'entraînement, où la partie de comptage compte une période de front du front montant ou du front descendant de chaque impulsion détecté par la partie de détection de front, où une partie de définition d'un temps de surveillance définit un temps de surveillance pour surveiller la période de front sur la base du signal de commande MLI, où une partie de comparaison de période de front compare la période de front comptée par la partie de comptage avec le temps de surveillance défini par la partie de définition du temps de surveillance ; et où la partie d'évaluation d'anomalie évalue si la partie d'entraînement fonctionne de manière anormale sur la base du résultat d'une comparaison effectuée par la partie de comparaison.

4. Dispositif selon la revendication 3, où une partie de détection de rapport cyclique détecte un rapport cyclique du signal d'entraînement MLI sur la base de la période de front comptée par la partie de comptage, et une partie de comparaison de rapport cyclique compare la valeur de rapport cyclique détectée par la partie de détection de rapport cyclique avec une valeur de rapport cyclique cible prise comme référence pour la génération du signal de commande MLI, où la partie d'évaluation d'anomalie évalue si la partie d'entraînement fonctionne de manière anormale sur la base des résultats d'une comparaison effectuée par la partie de comparaison de période de front et de la partie de comparaison de rapport cyclique.

5. Dispositif selon la revendication 3 ou 4, où la partie de définition de temps de surveillance définit un temps de surveillance qui n'est pas inférieur à la période MLI définie conformément au signal de commande MLI.

6. Dispositif selon l'une des revendications 3 à 5, où la partie de commande définit une plage de commande du rapport cyclique cible entre 0% ou plus et 100% ou moins, et la partie d'évaluation d'anomalie évalue que la partie d'entraînement fonctionne de manière anormale lorsque le front montant ou descendant n'est pas détecté par la partie de détection de front et que le résultat de la comparaison indiquant que le résultat du comptage par la partie de comptage dépasse le temps de surveillance est saisi dans la partie d'évaluation d'anomalie par la partie de comparaison de période de front.

7. Dispositif selon l'une des revendications 3 à 5, où la partie de commande définit une plage de commande du rapport cyclique cible entre 0% ou plus et 100% ou moins et où lorsque les valeurs de rapport cyclique sont de 0% et 100%, la partie d'évaluation d'anomalie évalue que la partie d'entraînement fonctionne normalement lorsque le front montant ou descendant n'est pas détecté par la partie de détection de front et que le résultat de la comparaison indiquant que le résultat du comptage par la partie de comptage dépasse le temps de surveillance est saisi dans la partie d'évaluation d'anomalie par la partie de comparaison de période de front.

8. Dispositif selon l'une des revendications 4 à 6, où la partie d'évaluation d'anomalie évalue que la partie d'entraînement fonctionne de manière anormale lorsqu'une différence entre la valeur de rapport cyclique détectée et la valeur de rapport cyclique cible n'est pas inférieure à une certaine valeur.

9. Dispositif selon l'une des revendications 3 à 8, où la partie d'évaluation d'anomalie envoie un signal d'anomalie à la partie de commande lorsqu'elle évalue que la partie d'entraînement fonctionne de manière anormale, et la partie de commande détecte l'anomalie de fonctionnement de la partie d'entraînement sur la base du signal d'anomalie émis par la partie d'évaluation d'anomalie.

10. Dispositif selon l'une des revendications 3 à 9, où avant le début de la commande MLI du moteur par la partie de commande, la partie d'évaluation d'anomalie évalue si le fonctionnement de la partie de comparaison de période de front, de la partie de détection de front, de la partie de définition de temps de surveillance et de la partie de comptage est normal ou anormal en fonction de si elle reçoit un résultat de comparaison indiquant que le résultat de comptage de la partie de comptage dépasse le temps de surveillance en provenance de la partie de comparaison de période de front lorsque le front montant ou le front descendant n'est pas détecté par la période de détection de front.

11. Procédé de surveillance d'un fonctionnement anormal d'un moteur électrique dans un système d'accélérateur électronique installé dans un véhicule, une commande du moteur comprenant :
une étape de commande consistant à générer un signal de commande pour commander le moteur,
une étape d'entraînement consistant à générer un signal d'entraînement sur la base du signal de commande pour entraîner le moteur,
une étape de comptage consistant à compter des périodes du signal d'entraînement sorti par la partie d'entraînement,
et une étape d'évaluation d'anomalie consistant à évaluer si une anomalie se produit lors de l'étape d'entraînement sur la base du signal de commande et du signal de comptage.

12. Procédé selon la revendication 11, où l'étape de commande consiste à générer un signal de commande MLI pour une commande MLI d'un moteur, et l'étape d'entraînement consiste à générer un signal d'entraînement MLI sur la base du signal de commande MLI pour entraîner le moteur, où une étape de détection de front consiste à détecter un front montant ou descendant de chaque impulsion du signal d'entraînement MLI, une étape de comptage consiste à compter une période de front du front montant ou descendant de chaque impulsion détectée, une étape de définition d'un temps de surveillance consiste à définir un temps de surveillance pour surveiller la période de front sur la base du signal de commande MLI, une étape de comparaison de période de front consiste à comparer la période de front comptée avec le temps de surveillance défini, et l'étape d'évaluation d'anomalie consiste à évaluer une anomalie de fonctionnement de la partie d'entraînement sur la base du résultat de la comparaison.

13. Procédé selon la revendication 11, où l'étape de commande consiste à générer un signal de commande MLI pour une commande MLI d'un moteur, et l'étape d'entraînement consiste à générer un signal d'entraînement MLI sur la base du signal de commande MLI pour entraîner le moteur, où une étape de détection de front consiste à détecter un front montant ou descendant de chaque impulsion du signal d'entraînement MLI, une étape de comptage consiste à compter une période de front du front montant ou descendant de chaque impulsion détectée, une étape de définition d'un temps de surveillance consiste à définir un temps de surveillance pour surveiller la période de front sur la base du signal de commande MLI, une première étape de comparaison consiste à comparer la période de front comptée aveç le temps de surveillance défini, une étape de détection de rapport cyclique consiste à détecter une valeur de rapport cyclique de chaque impulsion sur la base de la période de front comptée, une seconde étape de comparaison consiste à comparer la valeur de rapport cyclique détectée avec une valeur de rapport cyclique cible définie conformément au signal de commande MLI et l'étape d'évaluation d'anomalie consiste à évaluer si la partie d'entraînement fonctionne de manière anormale sur la base des résultats de comparaison de la première et de la seconde étape de comparaison.

14. Programme pour commander un dispositif selon l'une des revendications 1 à 10 et incarnant le procédé selon l'une des revendications 11 à 13.
